(19) Europäisches Patentamt
European Patent Office
Office européen des brevets

(11) EP 1 312 589 A1

(12) # DEMANDE DE BREVET EUROPEEN

(43) Date de publication:
**21.05.2003 Bulletin 2003/21**

(51) Int Cl.[7]: **C04B 18/10**, C23F 11/00, B09C 1/08, E01C 7/00

(21) Numéro de dépôt: **02292869.1**

(22) Date de dépôt: **19.11.2002**

(84) Etats contractants désignés:
**AT BE BG CH CY CZ DE DK EE ES FI FR GB GR IE IT LI LU MC NL PT SE SK TR**
Etats d'extension désignés:
**AL LT LV MK RO SI**

(30) Priorité: **20.11.2001 FR 0114983**

(71) Demandeur: **Eurovia**
**92500 Rueil-Malmaison (FR)**

(72) Inventeurs:
- **Dorigo, Alexandra**
**92260 Fontenay Aux Roses (FR)**
- **Goacolou, Honoré**
**78340 Les Clayes Sous Bois (FR)**
- **Fiaud, Christian**
**94100 Saint Maur des Fosses (FR)**
- **Maze, Michel**
**91410 Corbeuse (FR)**

(74) Mandataire: **Ahner, Francis**
**Cabinet Régimbeau**
**20, rue de Chazelles**
**75847 Paris cedex 17 (FR)**

(54) **Procédé de traitement du machefer pour lutter contre le gonflement**

(57) La présente invention concerne l'utilisation d'un inhibiteur de corrosion de l'aluminium pour traiter les mâchefers utiles pour la technique routière dans le but de contrôler *in situ* le comportement électrochimique de l'aluminium afin de lutter contre les problèmes de gonflement, un procédé de traitement du mâchefer destiné à réduire les désordres volumiques liés à la présence d'aluminium ainsi que le mâchefer susceptible d'être obtenu par ce procédé.

EP 1 312 589 A1

## Description

La présente invention concerne un procédé de traitement du mâchefer destiné à réduire les désordres volumiques liés à la présence d'aluminium lors de la mise en oeuvre du mâchefer dans les techniques routières et le mâchefer susceptible d'être obtenu par ce procédé.

Le mâchefer provient de l'incinération d'ordures ménagères. En effet, le traitement thermique des déchets génère, outre des rejets gazeux, plusieurs types de résidus solides minéraux : les mâchefers récupérés en sortie basse du four, qui peuvent correspondre à 25-30% du tonnage incinéré, les résidus d'épuration des fumées qui peuvent correspondre à 3 à 5% du tonnage incinéré et qui comprennent les cendres volantes du dépoussiérage et les résidus de traitement des gaz. Les mâchefers sont donc constitués de la partie lourde et incombustible des déchets incinérés. On entend par mâchefer, dans la présente demande de brevet, les résidus d'incinération des ordures ménagères, voire industrielles. De tels résidus sont constitués essentiellement de silice (environ 50%), de chaux (environ 10 à 20%) et de métaux ferreux (environ 10 à 20%). Le mâchefer peut renfermer également des produits polluants, tels que des métaux lourds ou des sels solubles (chlorure et sulfate en particulier), qui sont relargués au cours du temps.

Lorsqu'il est valorisé en technique routière, le mâchefer d'incinération des ordures ménagères ou MIOM constitue un « sol artificiel » au sens de la chimie de la corrosion. Le terme « sol », qui regroupe les sols artificiels et les sols naturels, s'emploie pour qualifier la couche superficielle de terrains intéressés par la pose d'ouvrages (canalisations enterrées, corps de chaussées...). Les sols en général et en particulier les mâchefers contiennent de l'eau, dite eau interstitielle, plus ou moins riche en sel dissous, qui permet de les considérer comme électrolytes et donc comme un milieu corrosif. Il s'agit d'un milieu corrosif plus complexe qu'un électrolyte aqueux. Ceci est lié à la composition et aux propriétés physico-chimiques des sols. Un sol est composé de diverses espèces : des substances inertes, essentiellement des composés insolubles qui ont peu d'influence chimique du point de vue de la corrosion, des substances corrosives telles que des sels solubles, des substances organiques et, dans certains cas, des espèces vivantes (bactéries). Un sol est donc un milieu composé d'éléments chimiques corrosifs en quantités variables et présentant des caractéristiques physico-chimiques interdépendantes aggravant ou non le processus d'attaque d'un métal. Les principales caractéristiques physiques au regard de la corrosion sont la granulométrie (texture) et la résistivité de l'eau du sol. Il est enfin à noter que la corrosivité d'un sol est caractérisée par sa teneur en sels dissous et par son pH.

Le mâchefer est classiquement traité avant sa mise en oeuvre, notamment dans le cadre de son emploi dans les techniques routières. Ainsi on fait subir au mâchefer une phase de maturation qui peut durer environ 3 mois, associée à une phase de criblage et de concassage. On fait aussi subir au mâchefer des étapes d'élimination du fer (traitement de déferraillage) et d'élimination de l'aluminium, le plus souvent de façon magnétique, ces étapes pouvant intervenir en cours ou en fin de maturation. L'élimination mécanique des particules d'aluminium peut notamment être effectuée par la technique des courants de Foucault. A la fin de cette préparation le mâchefer peut être stocké avant d'être utilisé pour les différentes applications exposées ci-après.

Il est ainsi connu de chercher à éliminer les déchets d'aluminium pour éviter les problèmes dus au gonflement lors de l'utilisation des mâchefers dans les techniques routières.

En effet, un des problèmes rencontrés lors de l'utilisation du mâchefer comme fondation ou sous-couche dans les techniques routières provient d'un gonflement localisé du revêtement bitumineux de surface, du fait de phénomènes de corrosion de l'aluminium contenu intrinsèquement dans les mâchefers. En effet, l'élimination mécanique des particules d'aluminium ne permet pas, en pratique, d'éliminer totalement ces dernières, ou bien parce que les particules sont trop fines, ou encore parce que l'efficacité de l'élimination mécanique est amoindrie par une présence accrue d'humidité dans le mâchefer.

Ainsi l'expansion volumique des produits de corrosion solides de l'aluminium est responsable de ces gonflements. Cette expansion volumique peut être de l'ordre de 3% par rapport au volume initialement mis en oeuvre. Par exemple, localement, une zone de gonflement de 20 cm de diamètre peut entraîner une déformation ponctuelle de surface de 2 à 3 cm de hauteur.

Le phénomène de gonflement s'explique par la formation de produits de corrosion suite à l'oxydation de l'aluminium en ions $Al^{3+}$ et à leur passage dans l'eau interstitielle. La nature des produits de corrosion responsables des gonflements observés sur des ouvrages à base de mâchefer est variable : on observe la présence de produits essentiellement amorphes cristallisant vers les formes gibbsite et bayérite du trihydroxyde d'aluminium $Al(OH)_3$.

Ce phénomène de gonflement est d'autant plus gênant dans les applications routières que le mâchefer se trouve proche de la surface.

La réaction de corrosion de l'aluminium dans le mâchefer peut en effet prendre diverses formes :

- la corrosion généralisée, en relation avec le pH fortement alcalin des mâchefers ;
- la corrosion par piqûres ou piqûration, liée à la présence d'espèces corrosives comme les ions chlorure et les ions sulfate ;
- la corrosion galvanique, en raison du contact possible de l'aluminium avec d'autres particules métalliques résiduelles non triées.

Dans des conditions de pH compris entre 4 et 9, l'aluminium est en général réputé pour sa bonne résistance à la corrosion en raison de la formation d'une couche d'oxyde compacte et protectrice à la surface du métal. Dans les mâchefers cette couche d'oxyde, également appelée film passif, présente un caractère fragile. Elle résiste peu à la corrosion par piqûration notamment pour des pH proches de la neutralité et à la corrosion généralisée notamment pour des pH compris entre 11 et 12. Dans le cadre d'une corrosion par piqûration, la rupture de la couche passive est par ailleurs favorisée par la présence d'espèces agressives telles que les ions chlorure.

Une des solutions apportées par l'enseignement de l'art antérieur est par exemple décrite dans le brevet EP 994 082, où on mélange le mâchefer avec un ciment à 95% de clinker présentant une teneur en aluminium tricalcique inférieure à 10% en poids.

De façon générale, les différents moyens couramment employés pour protéger les métaux contre la corrosion sont la protection par revêtement (peintures, matières plastiques, revêtements métalliques...) ou la protection électrochimique (protection cathodique par anode artificielle ou par courant imposé et protection anodique). Ces deux techniques ne sont pas adaptées au traitement du mâchefer dans son utilisation en technique routière. Par ailleurs, les inhibiteurs de la corrosion constituent une autre méthode de protection des métaux. Cependant ces derniers n'ont été utilisés jusqu'à présent que dans des milieux fermés, étanches, aqueux ou atmosphériques du type circuits d'échange thermique, enceintes de transport ou de stockage de métaux et non dans des systèmes ouverts et encore moins de type mâchefer.

Contrairement aux solutions proposées de confinement mécanique exposées dans EP 994 082 cité ci-dessus, les inventeurs ont maintenant trouvé qu'un moyen de contrôle *in situ* du comportement électrochimique de l'aluminium par le biais des techniques de lutte contre la corrosion était particulièrement adapté pour lutter contre le gonflement du mâchefer utilisé comme sous-couche routière.

La présente invention a donc pour objet de ralentir la cinétique de corrosion de l'aluminium par l'utilisation d'inhibiteurs de corrosion de l'aluminium pour traiter le mâchefer utile pour la technique routière, en particulier dans des couches proches de la surface, des chaussées notamment en couche de base. Ainsi on limite la formation des espèces expansives, c'est-à-dire des produits de corrosion de l'aluminium.

La présente invention fournit également un procédé de traitement du mâchefer en vue de réduire les problèmes liés au gonflement du fait de la présence de l'aluminium, caractérisé en ce qu'il comprend une étape de contrôle *in situ* du comportement électrochimique de l'aluminium.

Le mâchefer passivé susceptible d'être obtenu par le procédé de traitement selon l'invention fait aussi partie de l'invention.

Le mâchefer passivé ainsi obtenu peut non seulement être utilisé pour constituer la sous-couche de chaussée, mais aussi les couches d'assise et en particulier les couches de base et de fondation notamment de parkings ou encore de routes à faible et moyen trafic.

Dans le cadre de la présente invention, on entendra par inhibiteur de corrosion toute substance qui, ajoutée en petite quantité au milieu corrosif, c'est-à-dire au mâchefer, a la propriété de réduire ou d'annuler son agressivité envers le métal.

Parmi ces inhibiteurs de corrosion on trouve aussi bien les inhibiteurs organiques que les inhibiteurs minéraux. Les volumes de mâchefers mis en oeuvre étant relativement importants dans les applications routières, les inhibiteurs minéraux, moins onéreux que les inhibiteurs organiques, sont toutefois préférés dans le cadre de la présente invention.

Les inhibiteurs de corrosion qui peuvent être utilisés dans le cadre de la présente invention peuvent agir selon différents modes d'action.

Un des modes d'action consiste à ralentir la vitesse de la réaction anodique, à savoir l'oxydation de $Al^\circ$ en $Al^{3+}$, par exemple par formation d'une couche continue protectrice, ce qui limite le contact de l'aluminium avec le milieu corrosif. C'est le cas des inhibiteurs anodiques non oxydants de l'aluminium qui sont des inhibiteurs de corrosion adaptés pour lutter contre la corrosion généralisée.

Dans le cas de la lutte contre la corrosion par piqûration, on peut utiliser des inhibiteurs de corrosion qui présentent un mécanisme d'action de type adsorption en surface de l'inhibiteur de corrosion. Cette adsorption a lieu de façon préférentielle (ou compétitive) par rapport à l'ion agressif. Le schéma suivant permet de mettre en lumière ce mécanisme :

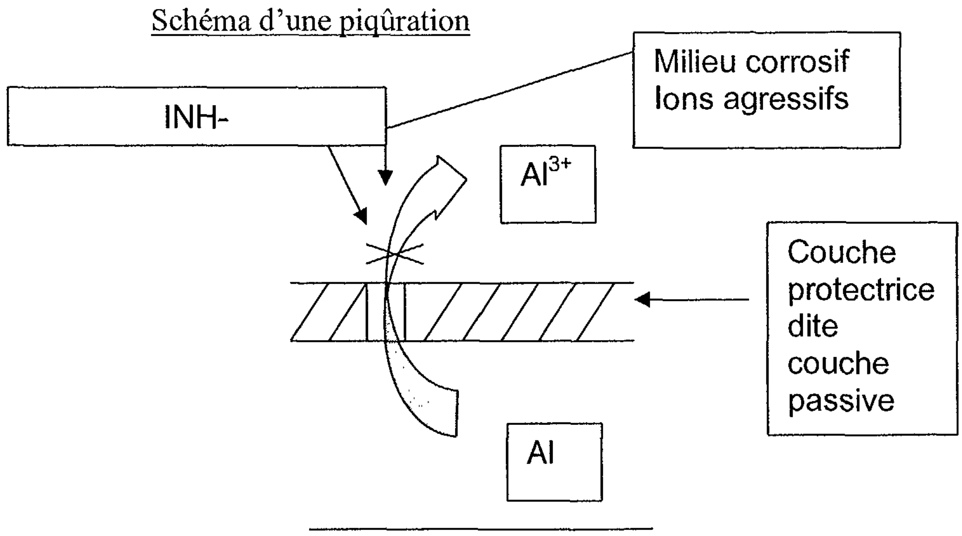


Où INH est l'inhibiteur de corrosion.

L'inhibiteur de corrosion INH, dans ce cas, permet de réduire l'accessibilité de l'aluminium au milieu corrosif, c'est à dire aux ions agressifs et donc de ralentir, voire d'éviter, le passage de Al° en $Al^{3+}$ par les zones de piqûration. La formation de produits de corrosion est ainsi largement ralentie. On parlera dans ce cas d'un « inhibiteur de corrosion localisée ».

Parmi les inhibiteurs anodiques non oxydants de l'aluminium on peut citer les sources en ions silicate ou encore en ions tartrate. La source en ions silicate peut se présenter sous différentes formes de sels. On peut notamment citer le silicate de sodium ou bien le silicate de potassium.

Le silicate de sodium peut être utilisé dans le cadre de la protection des systèmes d'eau potable en raison de son coût modéré et de sa faible toxicité. Il réduit la vitesse de transfert des ions métalliques vers la solution tout en réduisant la surface active du métal par formation d'un alumino-silicate fortement insoluble (U.R. EVANS ; Electrochim. Acta, 16, p 1285, 1971 et G.B. HATCH ; *Corrosion inhibitors*, C.C.Nathan Eds, Nace, Houston, p 126, 1973).

Le silicate de sodium existe sous diverses formes de composition variable $nNa_2O.mSiO_2$ plus ou moins hydratée. Le rapport silice/oxyde alcalin (m/n), appelé alcalinité des silicates, affecte l'efficacité inhibitrice du composé.

Parmi les inhibiteurs de corrosion localisée, on peut citer les sources en ions nitrate ($NO_3^-$), chromate, acétate, benzoate, molybdate ($MoO_4^{2-}$), phosphate ($PO_4^{3-}$) ou sulfate ($SO_4^{2-}$) ou sels d'acide mono-métasilicique ($SiO_3^{2-}$).

Les ions nitrate sont connus pour être de bons inhibiteurs de la corrosion par piqûration de l'aluminium en milieu chloruré par leur capacité à déplacer le potentiel de piqûration électrochimique vers des valeurs plus électropositives. L'effet inhibiteur des ions nitrate en milieu chloruré, est généralement attribué à une adsorption préférentielle (ou une compétition) des ions nitrate, réduisant ainsi le nombre de sites accessibles par les ions agressifs $Cl^-$ (H.BOHNI, H. H. UHLIG ; *J.Electrochem. Soc*, Vol.116, N°7 pp 906-910, 1969 et Z.SZKLARSKA,-SMIALOWSKA ; *Corrosion,* vol 27, N°6, pp 223-233, 1971).

Les mélanges des différents inhibiteurs précédemment cités peuvent également avantageusement être utilisés à titre d'inhibiteurs de corrosion selon la présente invention afin de combiner les effets recherchés de formation d'une couche continue protectrice et de lutte contre la corrosion par piqûration.

On préfère utiliser dans le cadre de la présente invention des sources en ions nitrate ou en ions silicate, ou encore un mélange de ces dernières. Les sources en ions silicate sont tout particulièrement préférées et notamment le silicate de sodium $nNa_2O.mSiO_2$ comportant un rapport (m/n) variant entre 2,5 et 3.

Selon le procédé de l'invention, on peut par exemple utiliser du nitrate de sodium à hauteur de 0,2 à 2% en masse par rapport à la masse totale du mâchefer sec, pour un mâchefer classique, c'est à dire contenant en moyenne de 0,5 à 2% d'aluminium.

Des résultats satisfaisants peuvent également être obtenus lorsqu'on utilise du silicate de sodium $nNa_2O.mSiO_2$ comportant un rapport (m/n) de l'ordre de 3, à hauteur de 0,3 % à 3 % en masse de $SiO_2$ par rapport à la masse totale du mâchefer sec, pour un mâchefer classique tel que décrit ci-dessus.

A titre d'utilisation combinée des deux types d'inhibiteurs de la corrosion de l'aluminium, on préfère tout particulièrement employer un mélange de nitrate de sodium à une concentration de 0,2 à 2% en masse par rapport à la masse totale du mâchefer sec et de silicate de sodium $nNa_2O.mSiO_2$ comportant un rapport (m/n) de l'ordre de 3 à une concentration de 0,3 % à 3 % en masse de $SiO_2$ par rapport à la masse totale du mâchefer sec.

Dans le cadre du traitement du mâchefer qui peut être effectué avant l'ajout d'un inhibiteur de corrosion selon la présente invention, le traitement de déferraillage peut être effectué notamment par tri magnétique, puis criblage dans un tamis de maille ne laissant passer que du gros sable ; la maturation peut s'effectuer dans les conditions classiquement employées et tout autre traitement appliqué optionnellement peut également l'être dans le cadre de modes particuliers de l'invention.

L'étape de traitement du mâchefer par un inhibiteur de corrosion peut être mise en oeuvre selon plusieurs techniques. Le mâchefer peut être traité dans la masse, c'est à dire que l'étape de traitement par un inhibiteur de corrosion peut s'effectuer pendant la préparation classique du mâchefer, telle que décrite précédemment.

L'étape de contrôle *in situ* du comportement électrochimique de l'aluminium est avantageusement précédée d'une étape d'élimination mécanique de l'aluminium.

Alternativement, le traitement peut être effectué après la mise en oeuvre du mâchefer par un système d'épandage de sorte que seule la partie supérieure du mâchefer, propice aux phénomènes de gonflements soit ainsi passivée. Il s'agit alors d'un traitement de surface et non plus en masse.

Le mâchefer passivé dans la masse, ou passivé uniquement en surface une fois la mise en oeuvre réalisée, peut être utilisé tel quel pour la technique routière dans ses applications usuelles et notamment en couche de base de parkings.

Le mâchefer traité par un liant hydraulique peut aussi être passivé par l'une ou l'autre des deux techniques, soit dans la masse, soit en surface. Par liant hydraulique on entend les liants classiques bien connus de l'homme du métier, utilisés dans les techniques routières. De façon appropriée, on met en oeuvre dans ce procédé une quantité dudit liant, à raison d'une proportion d'au moins 3% par rapport à la masse totale du mélange. Ces liants hydrauliques sont en général composés de $SiO_2$, $Al_2O_3$ et CaO essentiellement. On peut se reporter à la demande de brevet FR 2 689120 pour illustrer la préparation d'un mâchefer contenant un liant hydraulique. Ce type de mâchefer en mélange avec du liant peut être utilisé pour des couches de fondation notamment de parkings ou encore de routes à faible et moyen trafic.

Le mâchefer traité à la mousse de bitume peut aussi être passivé par l'une ou l'autre des deux techniques, soit dans la masse, soit à la surface. De préférence, on réalise le mélange en incorporant de la mousse de bitume, dont la température est comprise entre 140 et 190°C, dans du mâchefer dont la température est voisine de la température ambiante. La mousse de bitume est obtenue, par exemple, par injection de très faibles quantités d'eau et d'agents moussants dans le bitume par l'intermédiaire d'une chambre de mélange. On peut se reporter à la demande de brevet FR 2 755 884 pour illustrer ce mode particulier de réalisation de l'invention.

Enfin le mâchefer traité selon la technique des enrobés à chaud ou selon la technique d'enrobage à froid à l'émulsion de bitume peut également être passivé par les techniques décrites ci-dessus.

Par mâchefer traité selon la technique des enrobés à chaud on entend un enrobé hydrocarboné réalisé à chaud (plus de 120 °C) à partir de granulats séchés, constitué en totalité ou en partie de mâchefer mais aussi à partir d'un liant hydrocarboné, et éventuellement de dopes et/ou d'additifs (norme NFP 98-50).

Par mâchefer traité à l'émulsion de bitume on entend un enrobé hydrocarboné réalisé à partir de granulats, constitué en totalité ou en partie de mâchefer mais aussi à partir d'un liant hydrocarboné, ici une émulsion de bitume, et éventuellement de dopes et/ou d'additifs, dont les caractéristiques permettent un enrobage sans séchage et chauffage des granulats (norme NF P 98-150).

Les exemples suivants illustrent l'invention sans toutefois en limiter la portée.

**Exemple 1 :**

Structure de chaussée comportant du mâchefer passivé et traité avec un liant hydraulique.

- passivation préalable à la mise en oeuvre (passivation en masse)

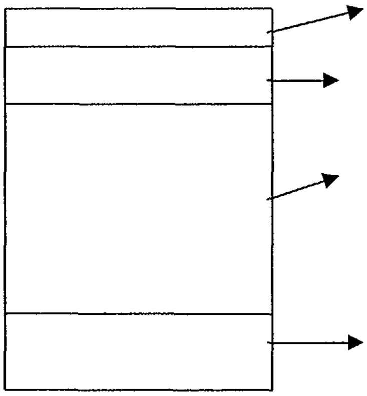

Couche de roulement : 4 cm Béton Bitumineux Mince

Couche de base 8 cm de grave bitume

25 cm de mâchefer passivé par 1 % de silicate de sodium + 0,5% de nitrate de sodium et traité par 7 % de ciment CEM I 42,5 en centrale de malaxage.
Les opérations de passivation et de traitement au ciment sont réalisées avant la mise en œuvre sur le chantier.

Plate forme PF2
sol support

- passivation après la mise en oeuvre (passivation surfacique)

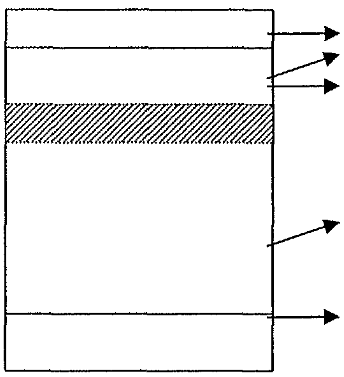

Couche de roulement : 4 cm Béton Bitumineux Mince
Couche de base : 8 cm de grave bitume
Passivation de surface par épandage de 2000 g/m² d'une solution mixte de silicate de sodium (20% de $SiO_2$) et de nitrate de sodium (17,5% de $NaNO_3$).

.25 cm de mâchefer traité par 7 % de ciment CEM I 42,5 en centrale de malaxage.

Plate forme PF2
sol support

**Exemple 2 :**

Structure de chaussée comportant du mâchefer passivé et traité à la mousse de bitume.

- passivation préalable à la mise en oeuvre (passivation en masse)

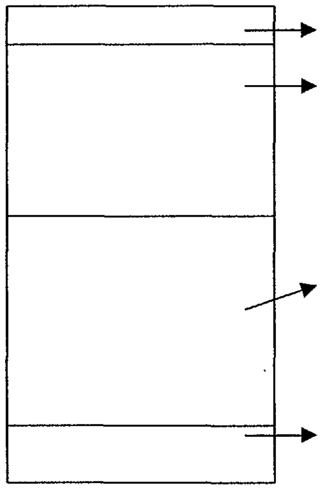

Couche de roulement : 1 cm enduit superficiel bicouche.

Couche de base : 12 cm de mâchefer passivé par 1 % de silicate de sodium + 0,5% de nitrate de sodium et traité par 4 ppc de mousse de bitume. Les opérations de passivation et de traitement au bitume sont réalisées avant la mise en œuvre sur le chantier.

Couche de fondation : 20 cm de Grave Non Traité

Plate forme PF2
sol support

- passivation après la mise en oeuvre (passivation surfacique)

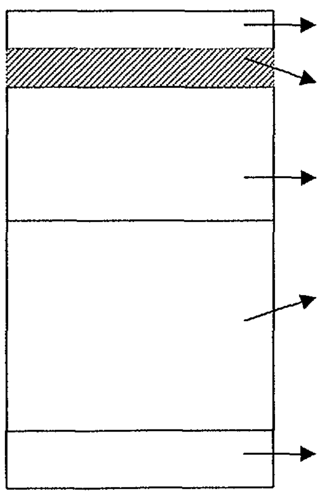

Couche de roulement : 1 cm enduit superficiel bicouche.

Passivation du surface par épandage de 2000 g/m² d'une solution mixte de silicate de sodium (20% de $SiO_2$) et de nitrate de sodium (17,5% de $NaNO_3$).

Couche de base : 12 cm de mâchefer passivé par 1 % de silicate de sodium et traité par 4 ppc de mousse de bitume.

Couche de fondation : 20 cm de Grave Non Traité

Plate forme PF2
sol support

**Exemple 3 : lutte contre la corrosion par piqûration**

Cet exemple illustre la réduction de la sensibilité à la corrosion par piqûration de l'aluminium métallique contenu dans un mâchefer traité au nitrate de sodium.

L'efficacité du traitement est appréciée sur le critère du potentiel de piqûration ($E_{piq}$) défini comme le potentiel au-dessus duquel des piqûres s'initient et se développent sans repassivation possible. Le traitement est d'autant plus efficace que le potentiel de piqûration est électropositif.

Nous avons comparé le potentiel de piqûration mesuré sur l'aluminium dans un mâchefer non traité et dans un mâchefer traité au nitrate de sodium.

Les résultats pour un mâchefer non traité et pour un mâchefer traité au nitrate de sodium sont regroupés dans le tableau 1. Nous pouvons en déduire que le traitement au nitrate de sodium réduit de façon significative la sensibilité à la piqûration de l'aluminium.

Tableau 1 :

| Influence du traitement des mâchefers au nitrate de sodium sur le potentiel de piqûration mesuré sur l'aluminium | | |
|---|---|---|
| | **MACHEFER NON TRAITE** | **MACHEFER TRAITE AU NITRATE DE SODIUM** |
| $E_{piq}$ (mV/ECS) (cf. figure 1) | - 520 ± 30 | + 130 ± 30 |

La Figure 1 représente l'influence du traitement du mâchefer au nitrate de sodium sur le potentiel de piqûration mesuré sur l'aluminium après une heure d'immersion.

**Exemple 4 : lutte contre la corrosion généralisée**

Cet exemple illustre la réduction de la cinétique de corrosion généralisée de l'aluminium métallique contenu dans un mâchefer traité au silicate de sodium.
L'efficacité du traitement est appréciée par la mesure de la résistance de polarisation ($R_p$) qui donne une indication relative de la vitesse de corrosion puisqu'elle est inversement proportionnelle à cette dernière. La mesure de la résistance de polarisation est particulièrement bien adaptée à l'étude comparative de différents milieux corrosifs ou à celle d'inhibiteurs de corrosion. On y accède par le biais de techniques électrochimiques : d'une part par la méthode de la polarisation linéaire autour du potentiel de corrosion (*cf. figure 2*) et d'autre part par spectrométrie d'impédance électrochimique (*cf. figure 3*).
Nous avons comparé la cinétique de corrosion de l'aluminium dans un mâchefer non traité et dans un mâchefer traité au silicate de sodium. Le calcul du taux d'inhibition, défini par l'équation 1, nous permet d'évaluer quantitativement l'efficacité inhibitrice du silicate de sodium dans le mâchefer :

$$\text{Taux d'inhibition} = \frac{v_{cor\,0} - v_{cor\,i}}{v_{cor\,0}} = \frac{R_{p\,i} - R_{p\,0}}{R_{p\,i}} \qquad \text{(équ. 1)}$$

$v_{cor\,0}$ : vitesse de corrosion sans inhibiteur ;
$v_{cor\,i}$ : vitesse de corrosion avec inhibiteur
$R_{p\,0}$ : résistance de polarisation sans inhibiteur ;
$R_{p\,i}$ : résistance de polarisation avec inhibiteur.

Les résultats comparatifs pour un mâchefer non traité et pour un mâchefer traité au silicate de sodium sont regroupés dans le tableau 2. Nous pouvons en déduire en première approximation que la cinétique de dissolution de l'aluminium est environ 6,5 fois plus faible pour un mâchefer traité au silicate de sodium que pour un mâchefer non traité. Pour un mâchefer traité au silicate de sodium, le taux d'inhibition de la corrosion généralisée de l'aluminium est de l'ordre de 85 %.

Tableau 2 :

| Influence du traitement du mâchefer au silicate de sodium sur la résistance de polarisation mesurée sur l'aluminium | | |
|---|---|---|
| | **MACHEFER NON TRAITE** | **MACHEFER TRAITE AU SILICATE DE SODIUM** |
| $R_p$ voltampérométrie (k$\Omega$.cm$^2$) (*cf. figure* 2) | 3,1 ± 0,5 | 22 ± 5 |
| $R_p$ impédancemétrie (k$\Omega$.cm$^2$) (*cf. figure* 3) | 3,3 ± 0,5 | 20 ± 5 |
| $R_p$ moyenne (k$\Omega$.cm$^2$) | 3,2 ± 0,5 | 21 ± 5 |
| TAUX D'INHIBITION : $(R_{pi}-R_{p0})/ R_{pi}$ | - | 85 % |

La Figure 2 représente l'influence du traitement des mâchefers au silicate de sodium sur la résistance de polarisation mesurée sur l'aluminium après une heure d'immersion (Mise en évidence par polarisation linéaire autour du potentiel de corrosion)

La Figure 3 représente l'influence du traitement des mâchefers au silicate de sodium sur la résistance de polarisation mesurée sur l'aluminium après une heure d'immersion (Mise en évidence par spectrométrie d'impédance électrochimique)

**Exemple 5 : combinaison de la lutte contre la corrosion par piqûration et contre la corrosion généralisée**

Cet exemple illustre la réduction simultanée de la sensibilité à la corrosion par piqûration et de la cinétique de corrosion généralisée de l'aluminium métallique contenu dans un mâchefer traité par un mélange inhibiteur de nitrate de sodium et de silicate de sodium. Comme dans les exemples 3 et 4, l'efficacité du traitement est appréciée respectivement sur le critère du potentiel de piqûration ($E_{piq}$) et par la mesure de la résistance de polarisation ($R_p$).

Les résultats comparatifs pour un mâchefer non traité et pour un mâchefer traité au mélange inhibiteur silicate de sodium et nitrate de sodium sont regroupés dans le tableau 3. Le traitement du mâchefer par le mélange inhibiteur précité permet de réduire de façon significative la sensibilité à la corrosion par piqûration et la cinétique de dissolution généralisée de l'aluminium dans le mâchefer (le taux d'inhibition est de l'ordre de 91 %). L'action de chacun des deux inhibiteurs employé isolement dans le mâchefer est donc conservée dans le cas d'un mélange inhibiteur des deux produits précités ce qui accroît avantageusement la protection de l'aluminium métallique.

Tableau 3 :

| Influence du traitement du mâchefer par un mélange inhibiteur de silicate de sodium et de nitrate de sodium sur la résistance de polarisation et sur le potentiel de piqûration mesurés sur l'aluminium | | |
|---|---|---|
| | **MACHEFER NON TRAITE** | **MACHEFER TRAITE AU SILICATE DE SODIUM ET AU NITRATE DE SODIUM** |
| $E_{piq}$ (mV/ECS) *(cf. figure* 4) | - 520 ± *50 mV* | + 250 ± *50 mV* |
| $R_p$ voltampérométrie (kΩ.cm²) *(cf. figure 5)* | 3,1 ± *0,5* | 35 ± *5* |
| $R_p$ impédancemétrie (kΩ.cm²) *(cf. figure 6)* | 3,3 ± *0,5* | 40 ± *5* |
| $R_p$ moyenne (kΩ.cm²) | 3,2 ± 0,5 | 37,5 ± *5* |
| TAUX D'INHIBITION ($R_{pi}$ - $R_{p0}$)/ $R_{pi}$ | - | 91 ± 5 % |

La Figure 4 représente l'influence du traitement du mâchefer au nitrate de sodium et au silicate de sodium sur le potentiel de piqûration mesuré sur l'aluminium après une heure d'immersion.

La Figure 5 représente l'influence du traitement des mâchefers au nitrate de sodium et au silicate de sodium sur la résistance de polarisation mesurée sur l'aluminium après une heure d'immersion (Mise en évidence par polarisation linéaire autour du potentiel de corrosion)

La Figure 6 représente l'influence du traitement des mâchefers au nitrate de sodium et au silicate de sodium sur la résistance de polarisation mesurée sur l'aluminium après une heure d'immersion (Mise en évidence par spectrométrie d'impédance électrochimique).

## Revendications

1. Utilisation d'un inhibiteur de corrosion de l'aluminium pour traiter des mâchefers utiles pour la technique routière.

2. Utilisation d'un inhibiteur de la corrosion de l'aluminium selon la revendication 1, **caractérisée en ce que** l'inhibiteur de la corrosion de l'aluminium est un inhibiteur organique ou minéral.

3. Utilisation d'un inhibiteur de la corrosion de l'aluminium selon la revendication 1 ou 2, **caractérisée en ce que** l'inhibiteur de la corrosion de l'aluminium est choisi parmi des inhibiteurs anodiques non oxydants de l'aluminium ou des inhibiteurs de corrosion localisée ou un mélange de ces derniers.

4. Utilisation d'un inhibiteur de la corrosion de l'aluminium selon la revendication 3, **caractérisée en ce que** l'inhibiteur anodique non oxydant de l'aluminium est choisi parmi les sources en ions silicates ou en ions tartrate.

**5.** Utilisation d'un inhibiteur de la corrosion de l'aluminium selon la revendication 4, **caractérisée en ce que** la source en ion silicates est un silicate de sodium.

**6.** Utilisation d'un inhibiteur de la corrosion de l'aluminium selon la revendication 5, **caractérisée en ce que** le silicate de sodium a une composition $nNa_2O.mSiO_2$.

**7.** Utilisation d'un inhibiteur de la corrosion de l'aluminium selon la revendication 6, **caractérisée en ce que** rapport silice/oxyde alcalin (m/n) prend une valeur variant de 2,5 à 3.

**8.** Utilisation d'un inhibiteur de la corrosion de l'aluminium selon la revendication 7, **caractérisée en ce que** le silicate de sodium est présent à hauteur de 0,3 à 3% en masse de $SiO_2$ par rapport à la masse totale de mâchefer sec.

**9.** Utilisation d'un inhibiteur de la corrosion de l'aluminium selon la revendication 3, **caractérisée en ce que** l'inhibiteur de corrosion localisée est choisi parmi une source en ions nitrate ($NO_3^-$), chromate, acétate, benzoate, molybdate ($MoO_4^{2-}$), phosphate ($PO_4^{3-}$) ou sulfate ($SO_4^{2-}$) ou sels d'acide mono-métasilicique ($SiO_3^{2-}$).

**10.** Utilisation d'un inhibiteur de la corrosion de l'aluminium selon la revendication 9, **caractérisée en ce que** l'inhibiteur de corrosion localisée est un nitrate de sodium.

**11.** Utilisation selon la revendication 10, **caractérisée en ce que** le nitrate de sodium est présent à hauteur de 0,2 à 2 % en masse par rapport à la masse totale de mâchefer sec.

**12.** Utilisation selon la revendication 1, **caractérisée en ce que** l'inhibiteur de corrosion de l'aluminium est un mélange d'un inhibiteur de la corrosion selon l'une quelconque des revendications 4 à 7 et d'un inhibiteur de la corrosion selon l'une quelconque des revendications 9 à 10.

**13.** Utilisation selon la revendication 12, **caractérisée en ce que** le silicate de sodium de composition $nNa_2O.mSiO_2$ dont le rapport silice/oxyde alcalin (m/n) prend une valeur variant de 2,5 à 3, est présent à une concentration comprise entre 0,3 à 3 % en masse de $SiO_2$ et le nitrate de sodium à une concentration comprise entre à 0,2 à 2 % en masse par rapport à la masse totale de mâchefer sec.

**14.** Procédé de traitement d'un mâchefer pour la technique routière, **caractérisé en ce qu'**il comprend une étape de contrôle *in situ* du comportement électrochimique de l'aluminium.

**15.** Procédé de traitement d'un mâchefer pour la technique routière selon la revendication 14, **caractérisé en ce que** l'étape de contrôle *in situ* consiste à ajouter un inhibiteur de la corrosion de l'aluminium.

**16.** Procédé de traitement d'un mâchefer pour la technique routière selon la revendication 14 ou 15, **caractérisé en ce que** l'inhibiteur de la corrosion est tel que défini dans l'une quelconque des revendications 2 à 13.

**17.** Procédé de traitement d'un mâchefer pour la technique routière selon l'une quelconque des revendications 14 à 15, **caractérisé en ce que** l'étape de contrôle *in situ* du comportement électrochimique de l'aluminium a lieu préalablement à la mise en oeuvre du mâchefer par un traitement dans la masse.

**18.** Procédé de traitement d'un mâchefer pour la technique routière selon l'une quelconque des revendications 14 à 16, **caractérisé en ce que** l'étape de contrôle *in situ* du comportement électrochimique de l'aluminium a lieu après la mise en oeuvre du mâchefer par un système d'épandage sur le sol.

**19.** Mâchefer stabilisé à l'égard des phénomènes des gonflements liés à la présence de l'aluminium, susceptible d'être obtenu par le procédé selon l'une des revendications 14 à 18.

**20.** Mâchefer stabilisé selon la revendication 19, **caractérisé en ce qu'**il a préalablement été traité par un liant hydraulique, à la mousse de bitume, à l'émulsion de bitume ou traité selon la technique des enrobés à chaud.

**21.** Utilisation de mâchefer stabilisé selon la revendication 19 ou 20 en couche de base.

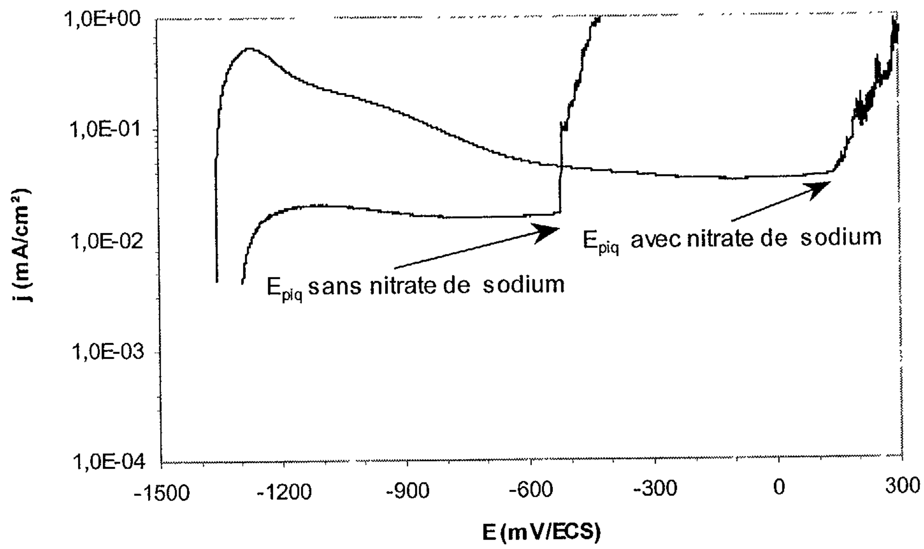
1,0E+00
1,0E-01
1,0E-02
1,0E-03
1,0E-04
j (mA/cm²)
-1500
-1200
-900
-600
-300
0
300
E (mV/ECS)
Epiq avec nitrate de sodium
Epiq sans nitrate de sodium

**FIGURE 1**

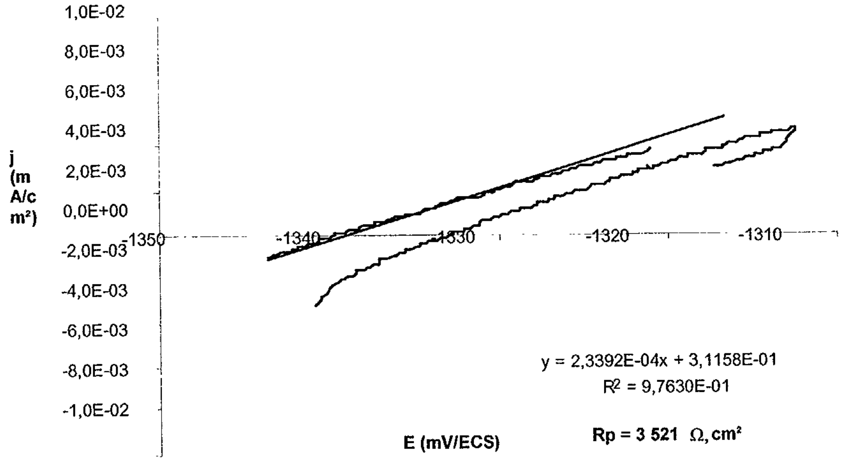


**(a) Sans silicate de sodium**
**$R_p$ = 3,5 kΩ.cm²**

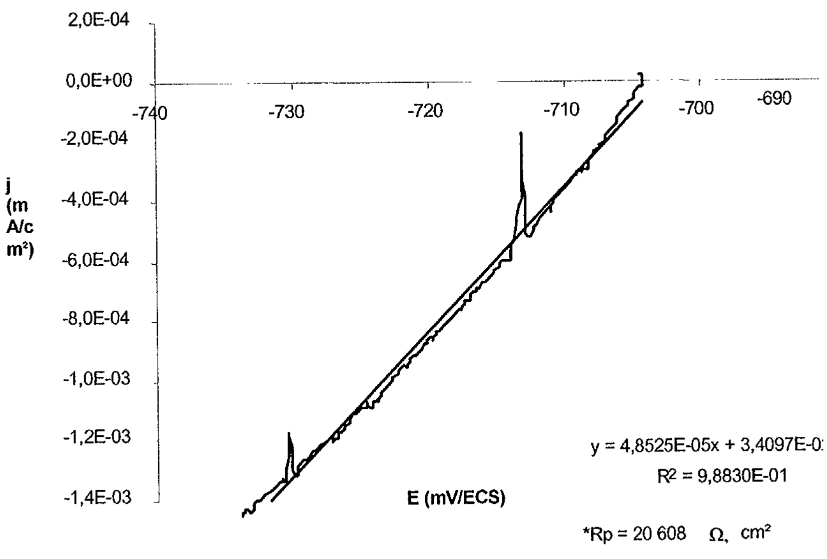


**(b) Traité au silicate de sodium**
**$R_p$ = 20,6 kΩ.cm²**

**FIGURE 2**

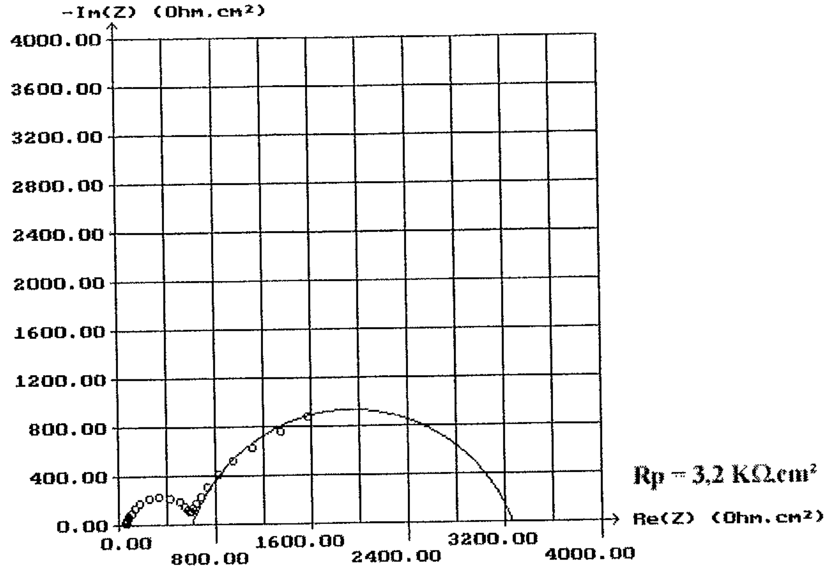


(a) Sans silicate de sodium
$R_p$ = 3,2 kΩ.cm²

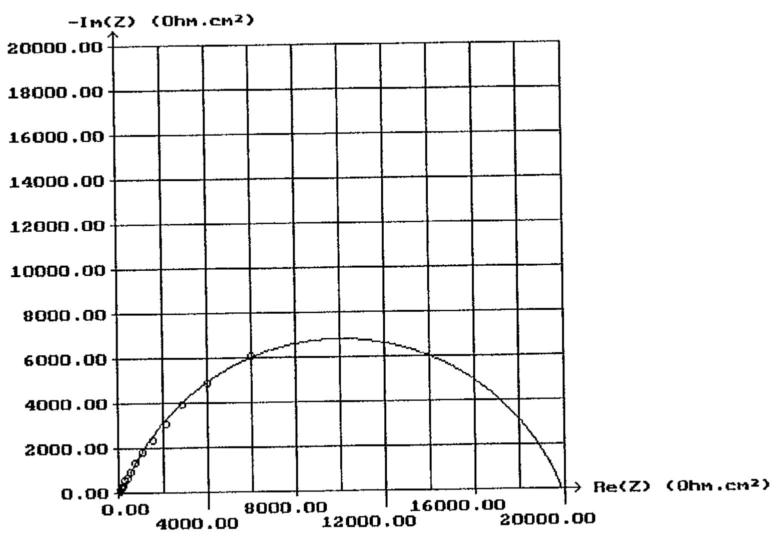


(b) Traité au silicate de sodium
$R_p$ = 20 kΩcm²

FIGURE 3

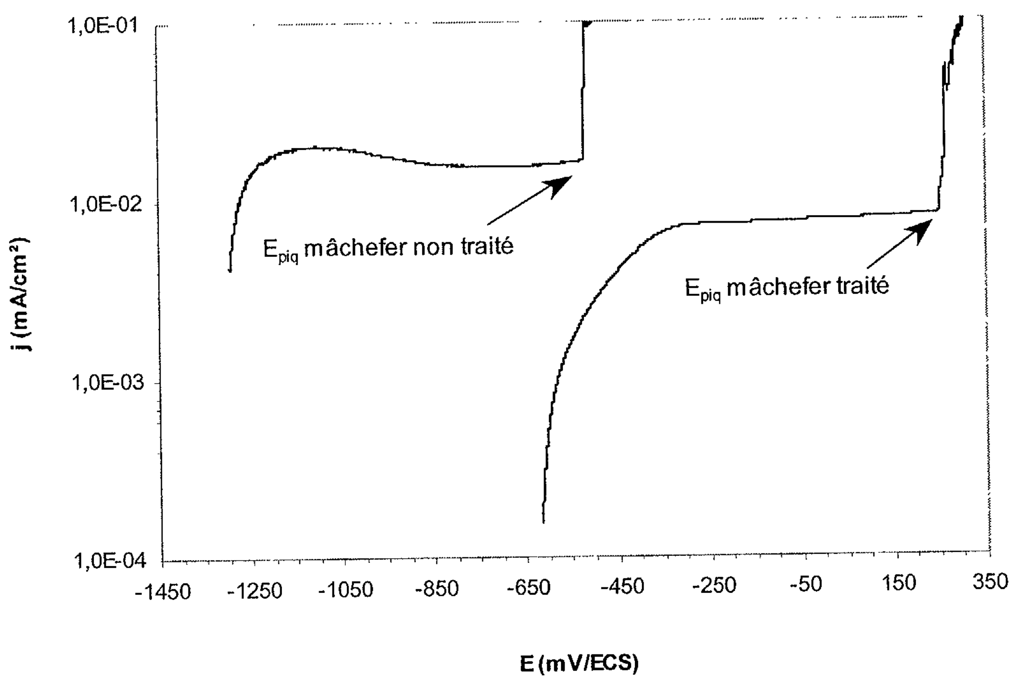


FIGURE 4

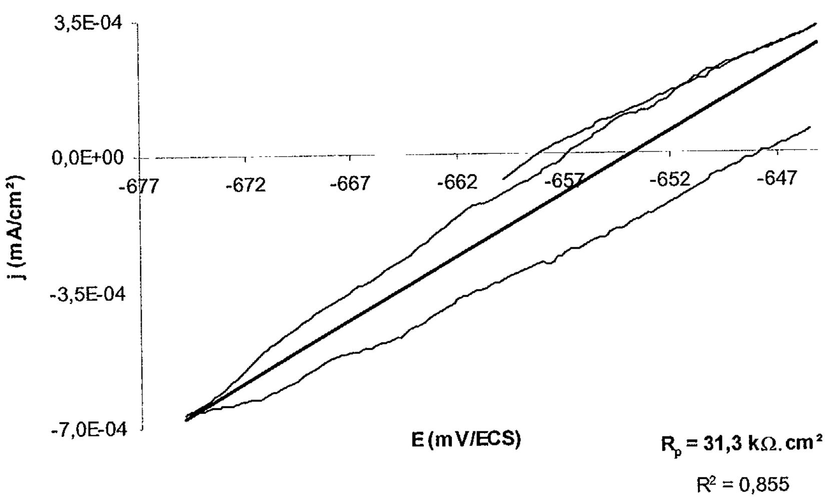


**Traité au silicate de sodium et au nitrate de sodium**
**$R_p$ = 31,3 kΩ.cm²**

FIGURE 5

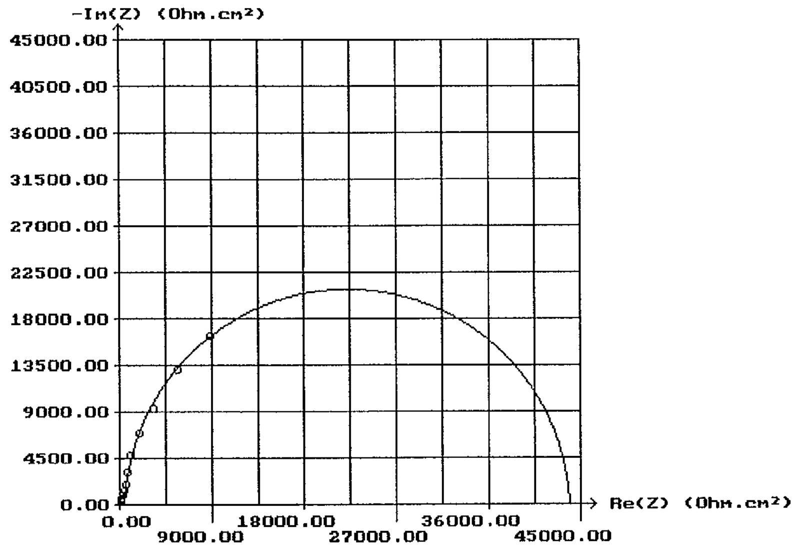


**Traité au silicate de sodium et au nitrate de sodium**
**$R_p$ = 43,8 kΩ.cm²**

**FIGURE 6**

Office européen des brevets

# RAPPORT DE RECHERCHE EUROPEENNE

Numéro de la demande
EP 02 29 2869

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | PATENT ABSTRACTS OF JAPAN vol. 2000, no. 19, 5 juin 2001 (2001-06-05) & JP 01 039749 A (SASAKI HAJIME ET AL) * abrégé * | 1-21 | C04B18/10 C23F11/00 B09C1/08 E01C7/00 |
| A | GB 2 318 795 A (BARDON ;AGGREGATE IND UK LTD (GB)) 6 mai 1998 (1998-05-06) * page 1, ligne 1-3; revendication 1 * | 1-21 | |
| A,D | FR 2 755 884 A (LEFEBVRE JEAN ETS) 22 mai 1998 (1998-05-22) | | |
| A | US 5 710 361 A (HARRINGTON JOSEPH G ET AL) 20 janvier 1998 (1998-01-20) | | |
| A | EP 0 831 498 A (JGC CORP ;NIPPON KAYAKU KK (JP)) 25 mars 1998 (1998-03-25) * revendications 1,2,4 * | | |
| P,X | DATABASE WPI Week 200304 Derwent Publications Ltd., London, GB; AN 2003-044959 XP002231406 & JP 2002 326853 A (HAZAMA GUMI) * abrégé * | 1-5,9, 10, 14-17,19 | DOMAINES TECHNIQUES RECHERCHES (Int.Cl.7) C04B C23F E01C B09C |

Le présent rapport a été établi pour toutes les revendications

| Lieu de la recherche | Date d'achèvement de la recherche | Examinateur |
|---|---|---|
| LA HAYE | 17 février 2003 | Daeleman, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

## ANNEXE AU RAPPORT DE RECHERCHE EUROPEENNE RELATIF A LA DEMANDE DE BREVET EUROPEEN NO.

EP 02 29 2869

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

17-02-2003

| Document brevet cité au rapport de recherche | Date de publication | Membre(s) de la famille de brevet(s) | Date de publication |
|---|---|---|---|
| JP 01039749 A | 10-02-1989 | JP 2544937 B2 | 16-10-1996 |
| GB 2318795 A | 06-05-1998 | AU 4787597 A | 22-05-1998 |
| | | DE 69702865 D1 | 21-09-2000 |
| | | DE 69702865 T2 | 25-01-2001 |
| | | DE 934361 T1 | 09-03-2000 |
| | | EP 0934361 A1 | 11-08-1999 |
| | | WO 9818864 A1 | 07-05-1998 |
| | | HK 1010204 A1 | 28-04-2000 |
| | | US 6190447 B1 | 20-02-2001 |
| FR 2755884 A | 22-05-1998 | FR 2755884 A1 | 22-05-1998 |
| | | CZ 9901697 A3 | 17-11-1999 |
| | | EP 0938387 A1 | 01-09-1999 |
| | | ES 2176796 T3 | 01-12-2002 |
| | | WO 9822233 A1 | 28-05-1998 |
| US 5710361 A | 20-01-1998 | US 5632715 A | 27-05-1997 |
| | | AU 1422197 A | 03-07-1997 |
| | | WO 9721469 A1 | 19-06-1997 |
| EP 0831498 A | 25-03-1998 | CA 2216270 A1 | 24-03-1998 |
| | | EP 0831498 A1 | 25-03-1998 |
| | | JP 10153694 A | 09-06-1998 |
| | | US 5973220 A | 26-10-1999 |
| JP 2002326853 A | 12-11-2002 | AUCUN | |

EPO FORM P0460

Pour tout renseignement concernant cette annexe : voir Journal Officiel de l'Office européen des brevets, No.12/82